# EUROPÄISCHE PATENTSCHRIFT

(11) **EP 3 547 618 B1**
(45) Veröffentlichungstag und Bekanntmachung des Hinweises auf die Patenterteilung: **01.03.2023**
(21) Anmeldenummer: 18164975.7
(22) Anmeldetag: 29.03.2018
(51) Int. Cl.: H04L 12/40

(54) **VERFAHREN ZUM AUFBAU EINER REDUNDANTEN KOMMUNIKATIONSVERBINDUNG UND AUSFALLGESICHERTE STEUERUNGSEINHEIT**
METHOD FOR ESTABLISHING A REDUNDANT COMMUNICATION CONNECTION AND FAIL-SAFE CONTROL UNIT
PROCÉDÉ D'ÉTABLISSEMENT D'UNE CONNEXION DE COMMUNICATION REDONDANTE ET UNITÉ DE COMMANDE SÉCURISÉE

(43) Veröffentlichungstag der Anmeldung: 02.10.2019
(73) Patentinhaber: Siemens Aktiengesellschaft, 80333 München (DE)
(72) Erfinder: Grosch, Thomas, 90574 Roßtal (DE); Laforsch, Jürgen, 77815 Bühl (DE); Renschler, Albert, 76275 Ettlingen (DE)

(56) Entgegenhaltungen:
- EP-A1- 2 547 045
- EP-B1- 3 051 371
- US-A- 5 202 822
- US-A1- 2009 265 493
- US-A1- 2010 030 937

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen im wesentlichen selbständigen Betrieb von Steuerungseinrichtungen, Sensoren, Maschinen und technischen Anlagen. Eine wesentliche Grundlage für eine zuverlässige Bereitstellung von Überwachungs-, Steuerungs- und Regelungsfunktionen mittels eines Prozessautomatisierungssystems besteht in einer vollständigen und korrekten Erfassung und Abbildung von Komponenten des industriellen Prozessautomatisierungssystems in einem Engineering- bzw. Projektierungssystem.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aus DE 10 2013 211 406 A1 ist bekannt, dass zur hochverfügbaren Anbindung von Automatisierungsgeräten mit vollständig unabhängigen Ethernet-Schnittstellen innerhalb eines redundanten Komunikationsnetzes an einfach angebundene Automatisierungsgeräte für das jeweilige einfach angebundene Automatisierungsgerät ein Y-Switch verwendet wird. Dabei ist der Y-Switch über einen ersten bzw. zweiten Port mit einem ersten bzw. Teilnetz des redundanten Kommunikationsnetzes verbunden, während er über einen dritten Port mittelbar oder unmittelbar mit dem einfach angebundenen Automatisierungsgerät verbunden ist. Darüber hinaus werden eingehende Datenrahmen am ersten, zweiten bzw. dritten Port einem ersten, zweiten bzw. dritten VLAN zugeordnet. Zusätzlich werden der erste bzw. zweite Port als Untagged Member für das erste und dritte VLAN bzw. für das zweite und dritte VLAN eingerichtet. Der dritte Port wird für alle drei VLANs als Untagged Member eingerichtet. An den ersten beiden Ports gelernte Unicast-MAC-Adressen werden automatisch als statischer Eintrag für das dritte VLAN übernommen. Bei Löschen einer an den ersten beiden Ports gelernten Unicast-MAC-Adresse erfolgt auch ein Löschen des korrespondierenden statischen Eintrags für das dritte VLAN.

Bei einer gesicherten Kommunikationsverbindung zu einem mit einem industriellen Automatisierungssystem verbundenen Kommunikationsgerät über ein ungesichertes Teilnetz überprüft eine Überwachungseinheit entsprechend EP 3 001 647 B1, ob eine neue dem Kommunikationsgerät für eine Verbindung zum ungesicherten Teilnetz zugeordnete Kommunikationsnetzadresse gültig wird. Die Überwachungseinheit übermittelt bei einem Wechsel einer Kommunikationsnetzadresse und einer noch bestehenden gesicherten Kommunikationsverbindung eine Adresswechselankündigung über die bestehende gesicherte Kommunikationsverbindung. Bei Empfang einer Adresswechselankündigung werden ein Aufbau einer zusätzlichen gesicherten Kommunikationsverbindung sowie eine Umschaltung von der bestehenden gesicherten Kommunikationsverbindung auf die zusätzliche gesicherte Kommunikationsverbindung eingeleitet.

Aus EP 2 547 045 A1 ist ein Feldkommunikationssystem bekannt, das ein Feldgerät als Slave-Gerät mit einem ersten Slave-Kommunikationsport und einem zweiten Slave-Kommunikationsport umfasst. Außerdem umfasst das Feldkommunikationssystem ein Kommunikationsmodul als Master-Gerät mit einem ersten Master-Kommunikationsport und einem zweiten Master-Kommunikationsport, die zum Ausführen der Kommunikation mit dem Feldgerät eine erste Kommunikationsleitung konfiguriert sind. Die erste Kommunikationsleitung ist dafür vorgesehen, den ersten Slave-Kommunikationsport mit dem ersten Master-Kommunikationsport zu verbinden. Außerdem ist eine zweite Kommunikationsleitung dafür vorgesehen, den zweiten Slave-Kommunikationsport mit dem zweiten Master-Kommunikationsport zu verbinden.

In EP 3 051 371 B1 ist ein Verfahren zum Aufbau einer unterbrechungsfreien Kommunikationsverbindung mit einem Kommunikationsgerät beschrieben, das einem industriellen Automatisierungssystem zugeordnet ist. Dabei überprüft eine dem Kommunikationsgerät zugeordnete Überwachungseinheit, ob eine zweite dem ersten Kommunikationsgerät zugeordnete Kommunikationsnetzadresse gültig wird. Bei Zuordnung einer neuen gültigen Kommunikationsnetzadresse und bestehender Kommunikationsverbindung initiiert die Überwachungseinheit einen Aufbau einer zusätzlichen Kommunikationsverbindung entsprechend Multipath-TCP (Transmission Control Protocol).

EP 2 881 812 B1 betrifft ein Verfahren zum Betreiben einer Automatisierungseinrichtung, deren CPU-Modul dazu ausgebildet ist, lesend oder schreibend auf dezentrale Peripherie-Module zuzugreifen. Die dezentralen Peripherie-Module umfassen jeweils zwei Interface-Module, die jeweils mit einer Eingabeund Ausgabe-Steuerung innerhalb einer Ringtopologie verbunden sind. Peripherie-Zugriffe werden über einen oder zwei Ringe ausgeführt werden. Mittels eines für jeden Ring vorgesehenen Redundanz-Managers wird der jeweilige Ring in einem Normalbetrieb logisch unterbrochen. Im Falle einer physikalischen Ringunterbrechung wird eine Ring-Rekonfiguration für den jeweiligen Ring eingeleitet. Aufgrund geeigneter Maßnahmen sind bereits während einer Ring-Rekonfiguration Peripheriezugriffe möglich.

Aus der älteren europäischen Patentanmeldung EP 3 428 748 A1 ist eine Anordnung mit zwei redundanten Systemen bekannt, die in einem zyklischen Betrieb parallel arbeiten. Beide die Systeme überwachen sich wechselseitig und regelmäßig hinsichtlich der Ergebnisse von durch das jeweils andere System erledigten Aufgaben. Bei einem festgestellten Fehler wird eines der Systeme für den Produktivbetrieb ausgewählt bzw. bestätigt. Dabei wird für jedes System in mehreren oder allen Zyklen jeweils zumindest eine Kenngröße über einen Betriebsparameter erfasst und zur Aktualisierung zumindest eines statistischen Parameters verwendet. Falls eine Abweichung der Ergebnisse der beiden Systeme festgestellt wird, wird für jedes System ein aktueller Betriebsparameter mit dem zugehörigen statistischen Parameter in Bezug gesetzt. Das System, bei dem der aktuelle Betriebsparameter weniger von dem zugehörigen statischen Parameter abweicht, wird als ordnungsgemäß funktionierendes System erkannt und für den Produktivbetrieb verwendet.

Der vorliegenden Erfindung liegt die Aufgabe zugrunde, ein Verfahren zum Aufbau einer redundanten Kommunikationsverbindung zwischen einer ausfallgesicherten Steuerungseinheit mit redundanten Teilsystemen und einem Kommunikationsgerät zu schaffen, das eine von einer zunächst vorgegebenen Anzahl der redundanten Teilsysteme im wesentlichen unabhängige Kommunikation zwischen der ausfallgesicherten Steuerungseinheit und dem Kommunikationsgerät ermöglicht, sowie eine geeignete Vorrichtung zu dessen Durchführung anzugeben.

Diese Aufgabe wird erfindungsgemäß durch ein Verfahren mit den in Anspruch 1 angegebenen Merkmalen und durch eine Steuerungseinheit mit den in Anspruch 13 angegebenen Merkmalen gelöst. Vorteilhafte Weiterbildungen der vorliegenden Erfindung sind in den abhängigen Patentansprüchen angegeben.

Das erfindungsgemäße Verfahren ist zum Aufbau einer redundanten Kommunikationsverbindung zwischen einem Kommunikationsgerät und einer ausfallgesicherten Steuerungseinheit vorgesehen, die einem industriellen Automatisierungssystem zugeordnet ist und zumindest ein Primär-Steuerungsgerät sowie ein Sekundär-Steuerungsgerät umfasst. Dabei sind das Primär-Steuerungsgerät und das Sekundär-Steuerungsgerät zueinander redundant. Das Kommunikationsgerät kann beispielsweise Bestandteil eines Automatisierungsgeräts sein. Eine Transport- bzw. Vermittlungsfunktionseinheit des Kommunikationsgeräts baut unter Verwendung zumindest einer dem Primär-Steuerungsgerät bzw. dem Sekundär-Steuerungsgerät zugeordneten Kommunikationsnetzadresse zwei Kommunikationsverbindungen zur ausfallgesicherten Steuerungseinheit auf. Auf eine Anfrage eines Kommunikationsgeräts zum Aufbau einer Kommunikationsverbindung können das Primär-Steuerungsgerät und das Sekundär-Steuerungsgerät beispielsweise eine Adressinformation zum jeweils anderen Steuerungsgerät bereitstellen.

Erfindungsgemäß baut die Transport- bzw. Vermittlungsfunktionseinheit des Kommunikationsgeräts eine erste Kommunikationsverbindung zu einer Transport- bzw. Vermittlungsfunktionseinheit des Primär-Steuerungsgeräts und eine zweite Kommunikationsverbindung zu einer Transport- bzw. Vermittlungsfunktionseinheit des Sekundär-Steuerungsgeräts auf. Vorteilhafterweise werden die erste Kommunikationsverbindung und die zweite Kommunikationsverbindung entsprechend Transmission Control Protocol aufgebaut. Über die erste Kommunikationsverbindung übermittelte Daten werden vom Primär-Steuerungsgerät über eine erste Synchronisationsverbindung an das Sekundär-Steuerungsgerät weitergeleitet. Dagegen werden über die zweite Kommunikationsverbindung übermittelte Daten vom Sekundär-Steuerungsgerät über eine zweite Synchronisationsverbindung an das Primär-Steuerungsgerät weitergeleitet. Auf diese Weise können einfach und zuverlässig skalierbare redundante Kommunikationsverbindungen zu einer ausfallgesicherten Steuerungseinheit aufgebaut werden. Erfindungsgemäß werden zwischen dem Kommunikationsgerät und der ausfallgesicherten Steuerungseinheit zu übermittelnde Datensegmente alternierend über die erste Kommunikationsverbindung oder über die zweite Kommunikationsverbindung übermittelt.

Entsprechend einer bevorzugten Ausgestaltung der vorliegenden Erfindung weisen die Transport- bzw. Vermittlungsfunktionseinheit des Primär-Steuerungsgeräts und die Transport- bzw. Vermittlungsfunktionseinheit des Sekundär-Steuerungsgeräts jeweils eine Multipath-TCP-Funktionalität auf. Dementsprechend weist auch die Transport- bzw. Vermittlungsfunktionseinheit des Kommunikationsgeräts eine Multipath-TCP-Funktionalität auf. Vorteilhafterweise werden die erste Kommunikationsverbindung und die zweite Kommunikationsverbindung jeweils als korrespondierende Multipath-TCP-Subflows aufgebaut. Dabei ist die erste Kommunikationsverbindung ein erster Multipath-TCP-Subflow, während die zweite Kommunikationsverbindung ein zweiter Multipath-TCP-Subflow ist. Vorzugsweise werden auch die erste Synchronisationsverbindung und die zweite Synchronisationsverbindung zwischen dem Primär-Steuerungsgerät und dem Sekundär-Steuerungsgerät als korrespondierende Multipath-TCP-Subflows aufgebaut.

Die Transport- bzw. Vermittlungsfunktionseinheit des Primär-Steuerungsgeräts und die Transport- bzw. Vermittlungsfunktionseinheit des Sekundär-Steuerungsgeräts verwalten entsprechend einer besonders bevorzugten Ausgestaltung der vorliegenden Erfindung jeweils sowohl eine dem ersten Multipath-TCP-Subflow zugeordnete Verbindung als auch eine dem zweiten Multipath-TCP-Subflow zugeordnete Verbindung. Insbesondere ordnet die Transport- bzw. Vermittlungsfunktionseinheit des Sekundär-Steuerungsgeräts entsprechend einer weiteren Ausgestaltung über die erste Synchronisationsverbindung weitergeleitete Daten der ersten Kommunikationsverbindung dem ersten Multipath-TCP-Subflow zu. Dementsprechend ordnet die Transport- bzw. Vermittlungsfunktionseinheit des Primär-Steuerungsgeräts über die zweite Synchronisationsverbindung weitergeleitete Daten der zweiten Kommunikationsverbindung dem zweiten Multipath-TCP-Subflow zu.

Entsprechend einer Weiterbildung der vorliegenden Erfindung werden dabei zwischen dem Kommunikationsgerät und der ausfallgesicherten Steuerungseinheit zu übermittelnde Datensegmente in erste Datensegmente, die nur über die erste Kommunikationsverbindung übermittelt werden, und in zweite Datensegmente unterteilt, die nur über die zweite Kommunikationsverbindung übermittelt werden. Dies kann beispielsweise abhängig von einer Auslastung der Kommunikationsverbindungen erfolgen.

Die Transport- bzw. Vermittlungsfunktionseinheiten der Steuerungsgeräte bzw. des Kommunikationsgeräts sind insbesondere zur Verarbeitung eines Internetprotokollstapels ausgestaltet und eingerichtet. Beispielsweise können die Transport- bzw. Vermittlungsfunktionseinheiten in das Kommunikationsgerät bzw. in die Steuerungsgeräte integriert sein, wobei die Transport- bzw. Vermittlungsfunktionseinheiten jeweils über einen Kommunikationsnetzadapter-Treiber auf einen Kommunikationsnetzadapter des Kommunikationsgeräts bzw. der Steuerungsgeräte zugreifen. Die Kommunikationsnetzadapter umfassen insbesondere jeweils eine Sende- und Empfangseinheit und eine Steuerungseinheit zur Koordination eines Zugriffs auf ein Kommunikationsmedium.

Die erfindungsgemäße ausfallgesicherte Steuerungseinheit ist zur Durchführung eines Verfahrens entsprechend vorangehenden Ausführungen vorgesehen und umfasst zumindest ein Primär-Steuerungsgerät sowie ein Sekundär-Steuerungsgerät. Das Primär-Steuerungsgerät und das Sekundär-Steuerungsgerät sind zueinander redundant und umfassen jeweils eine Transport- bzw. Vermittlungsfunktionseinheit. Außerdem ist die ausfallgesicherte Steuerungseinheit dafür ausgestaltet und eingerichtet ist, dass eine Transport- bzw. Vermittlungsfunktionseinheit eines Kommunikationsgeräts unter Verwendung zumindest einer dem Primär-Steuerungsgerät bzw. dem Sekundär-Steuerungsgerät zugeordneten Kommunikationsnetzadresse zwei Kommunikationsverbindungen zur ausfallgesicherten Steuerungseinheit aufbaut.

Erfindungsgemäß ist die ausfallgesicherte Steuerungseinheit dafür ausgestaltet und eingerichtet, dass über eine erste Kommunikationsverbindung zwischen dem Kommunikationsgerät und dem Primär-Steuerungsgerät übermittelte Daten vom Primär-Steuerungsgerät über eine erste Synchronisationsverbindung an das Sekundär-Steuerungsgerät weitergeleitet werden. Darüber hinaus ist die ausfallgesicherte Steuerungseinheit dafür ausgestaltet und eingerichtet, dass über eine zweite Kommunikationsverbindung zwischen dem Kommunikationsgerät und dem Sekundär-Steuerungsgerät übermittelte Daten vom Sekundär-Steuerungsgerät über eine zweite Synchronisationsverbindung an das Primär-Steuerungsgerät weitergeleitet werden und dass zwischen dem Kommunikationsgerät und der ausfallgesicherten Steuerungseinheit zu übermittelnde Datensegmente alternierend über die erste Kommunikationsverbindung oder über die zweite Kommunikationsverbindung übermittelt werden.

Die vorliegende Erfindung wird nahfolgend an einem Ausführungsbeispiel anhand der Zeichnung näher beschrieben. Es zeigt
- Figur 1: ein industrielles Automatisierungssystem mit zumindest einer ausfallgesicherten Steuerungseinheit und einem mit dieser kommunizierenden Kommunikationsgerät,
- Figur 2: eine Detaildarstellung einer Synchronisation innerhalb der ausfallgesicherten Steuerungseinheit.

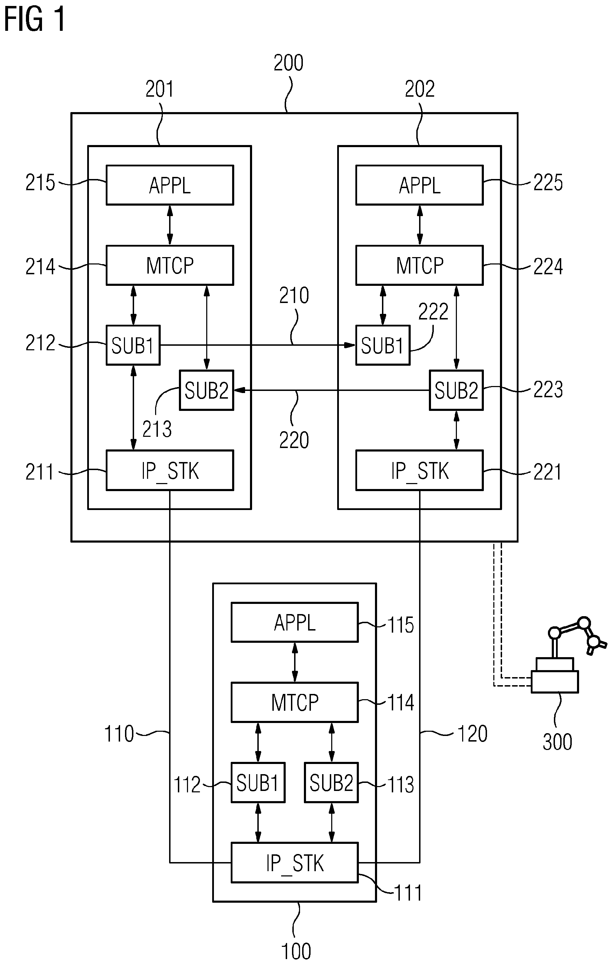

Das in Figur 1 vereinfacht dargestellte industrielle Automatisierungssystem umfasst eine ausfallgesicherte Steuerungseinheit 200, insbesondere eine speicherprogrammierbare Steuerung, mit einem Primär-Steuerungsgerät 201 und einem Sekundär-Steuerungsgerät 202. Speicherprogrammierbare Steuerungen umfassen üblicherweise jeweils ein Kommunikationsmodul, eine Zentraleinheit sowie zumindest eine Eingabe/Ausgabe-Einheit. Über Kommunikationsmodule können speicherprogrammierbare Steuerungen beispielsweise mit einem Switch oder Router oder mit einem Feldbus verbunden werden. Eingabe/Ausgabe-Einheiten dienen einem Austausch von Steuerungs- und Messgrößen zwischen speicherprogrammierbaren Steuerungen und durch speicherprogrammierbare Steuerungen gesteuerten Maschinen oder Vorrichtungen 300. Die Zentraleinheiten sind insbesondere für eine Ermittlung geeigneter Steuerungsgrößen aus erfassten Messgrößen vorgesehen. Obige Komponenten speicherprogrammierbarer Steuerungen werden vorzugsweise über ein Rückwandbus-System miteinander verbunden.

Das Primär-Steuerungsgerät 201 und das Sekundär-Steuerungsgerät 202 sind zueinander redundant und umfassen jeweils eine Vermittlungsfunktionseinheit 211, 221 zur Verarbeitung eines Internetprotokollstapels, eine Transportfunktionseinheit 214, 224 mit Multipath-TCP-Funktionalität und eine Laufzeitumgebung 215, 225 für Anwendungen bzw. Steuerungsprogramme. Die Vermittlungsfunktionseinheiten 211, 221 greifen jeweils über einen Kommunikationsnetzadapter-Treiber auf einen Kommunikationsnetzadapter des jeweiligen Steuerungsgeräts zu. Die Kommunikationsnetzadapter umfassen wiederum jeweils eine Sendeund Empfangseinheit und eine Steuerungseinheit zur Koordination eines Zugriffs auf ein Kommunikationsmedium.

Im vorliegenden Ausführungsbeispiel handelt es sich bei der ausfallgesicherten Steuerungseinheit 200 um ein hochverfügbares System. Üblicherweise gilt ein System dann als hochverfügbar, wenn eine durch das System bereitgestellte Anwendung auch bei einem Ausfall einer Systemkomponente weiterhin verfügbar ist und ohne unmittelbaren menschlichen Eingriff weiter genutzt werden kann. Dabei sollte für einen Anwender keine oder nur eine minimale Unterbrechung wahrnehmbar sein. Fällt beispielsweise ein Steuerungsgerät 201, 202 der ausfallgesicherten Steuerungseinheit 200 aus, erfolgt ein nahtloses Umschalten auf das verbleibende Steuerungsgerät. Hochverfügbarkeit eines Systems bedeutet dementsprechend, bei Ausfall einer seiner Systemkomponente einen uneingeschränkten Betrieb zu gewährleisten.

Das Primär-Steuerungsgerät 201 und das Sekundär-Steuerungsgerät 202 weisen im vorliegenden Ausführungsbeispiel Zentraleinheiten auf, die sowohl für eine asynchrone Kopplung als auch für eine synchrone Kopplung ausgebildet sind. Bei einer synchronen Kopplung werden Steuerungsprogramme bzw. Programmpfade der Steuerungsprogramme im Primär-Steuerungsgerät 201 und im Sekundär-Steuerungsgerät 202 zeitlich synchron durchlaufen. An Programmstellen, an denen ein Abgleich zwischen beiden Steuerungsgeräten 201, 202 vorgesehen ist, warten beide Steuerungsgeräte 201, 202 auf eine Antwort des jeweils anderen Steuerungsgeräts und setzen erst dann jeweils ihre Programmverarbeitung fort.

Für eine asynchrone Kopplung kann dem Primär-Steuerungsgerät 201 beispielsweise eine Master-Rolle zugeordnet werden, während das Sekundär-Steuerungsgerät 202 eine Slave-Rolle haben kann. Falls das Primär-Steuerungsgerät 201 unter diesen Voraussetzungen ausfällt, übernimmt das Sekundär-Steuerungsgerät 202 die Master-Rolle. Damit das Primär-Steuerungsgerät 201 und das Sekundär-Steuerungsgerät 202 ihre jeweiligen Steuerungsprogramme bzw. Programmpfade zeitlich asynchron verarbeiten können, synchronisieren sie sich über Synchronisationsverbindungen 210, 220. Auf dieser Basis werden Redundanz- und Überwachungsfunktionen realisiert. Bei einer zeitlich asynchronen Verarbeitung der Steuerungsprogramme bzw. Programmpfade durchläuft das Steuerungsgerät mit Slave-Rolle vorzugsweise nur Programmpfade, die durch das Steuerungsgerät mit Master-Rolle freigegeben sind. Eine detaillierte Beschreibung zur asynchronen Kopplung ist EP 2 657 797 A1 zu entnehmen.

Neben der ausfallgesicherten Steuerungseinheit 200 umfasst das in Figur 1 dargestellte industrielle Automatisierungssystem ein Kommunikationsgerät 100, das beispielsweise in ein Automatisierungsgerät integriert sein kann und vorzugsweise über ein Ethernet-basiertes Kommunikationsnetz mit der ausfallgesicherten Steuerungseinheit 200 verbunden ist. Automatisierungsgeräte können insbesondere Bedien- und Beobachtungsstationen, speicherprogrammierbare Steuerungen, RFID-Lesegeräte oder Systeme für maschinelle Bildverarbeitung sein. Bedien- und Beobachtungsstationen dienen zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere werden Bedien- und Beobachtungsstationen zur Anzeige von Werten eines Regelungskreises und zur Veränderung von Regelungsparametern verwendet. Bedien- und Beobachtungsstationen umfassen zumindest eine graphische Benutzerschnittstelle, ein Eingabegerät, eine Prozessoreinheit und ein Kommunikationsmodul. Darüber hinaus kann das Kommunikationsgerät 100 beispielsweise auch einem Engineering-System zur Projektierung von Automatisierungsgeräten oder einem Leitsystem zur Überwachung von Automatisierungsgeräten zugeordnet bzw. eine entsprechende Systemkomponente sein.

Neben Automatisierungsgeräten kann das industrielle Automatisierungssystem auch Netzinfrastrukturgeräte, wie Switche, Router oder Firewalls, umfassen. Diese Netzinfrastrukturgeräte dienen insbesondere zum Anschluss von speicherprogrammierbaren Steuerungen, Eingabe/Ausgabe-Einheiten (I/O-Module) oder Bedien- und Beobachtungsstationen des industriellen Automatisierungssystems. Eingabe/Ausgabe-Einheiten können als dezentrale Peripheriemodule ausgestaltet sein, die entfernt von einer speicherprogrammierbaren Steuerung angeordnet sind.

Grundsätzlich können die Steuerungsgeräte 201, 202 auch redundant betriebene Servereinheiten eines Cloud-, Edge- oder Fog-Computing-Systems sein. Derartige Computing-Systeme umfassen jeweils mehrere Servereinheiten, durch die IT-Infrastruktur, wie Speicherplatz, Rechenleistung oder Anwendungssoftware, als Dienst bereitgestellt wird. Insbesondere können die durch die Servereinheiten bereitgestellten Dienste Anwendungen bzw. Funktionen zur System-, Prozess- und Geräteüberwachung, zur Gerätesteuerung und -konfiguration, zur Erfassung und Analyse von Automatisierungsgeräten zugeordneten Messwerten und Zustandsinformationen sowie Kommunikationsund Automatisierungsfunktionen umfassen.

Im Zusammenhang mit redundant betriebenen Servereinheiten eines Cloud-, Edge- oder Fog-Computing-Systems kann das Kommunikationsgerät 100 insbesondere ein Edge-Computing-Client oder ein Plant-Data-Hub sein. Über einen Plant-Data-Hub als Datenverteilereinheit bzw. Netzinfrastrukturgerät kann eine Vielzahl von Kommunikations- oder Automatisierungsgeräten an ein Cloud-, Edge- oder Fog-Computing-Systems angebunden werden.

Auch Kommunikationsgerät 100 umfasst eine Vermittlungsfunktionseinheit 111 zur Verarbeitung eines Internetprotokollstapels, eine Transportfunktionseinheit 114 mit Multipath-TCP-Funktionalität und eine Laufzeitumgebung 115 für Anwendungen bzw. Steuerungsprogramme. Analog zu obigen Ausführungen greift die Vermittlungsfunktionseinheit 111 über einen Kommunikationsnetzadapter-Treiber auf einen Kommunikationsnetzadapter des Kommunikationsgeräts 100 zu. Der Kommunikationsnetzadapter umfasst wiederum eine Sende- und Empfangseinheit und eine Steuerungseinheit zur Koordination eines Zugriffs auf ein Kommunikationsmedium.

Die Transportfunktionseinheit 114 des Kommunikationsgeräts 100 baut unter Verwendung zumindest einer dem Primär-Steuerungsgerät 201 bzw. dem Sekundär-Steuerungsgerät 202 zugeordneten Kommunikationsnetzadresse zwei Kommunikationsverbindungen zur ausfallgesicherten Steuerungseinheit 200 auf. Vorteilhafterweise stellen das Primär-Steuerungsgerät 201 und das Sekundär-Steuerungsgerät 202 auf eine Anfrage eines Kommunikationsgeräts zum Aufbau einer Kommunikationsverbindung eine Adressinformation zum jeweils anderen Steuerungsgerät bereit. Damit ist es ausreichend, wenn dem Kommunikationsgerät 100 zunächst nur eine Kommunikationsadresse eines der beiden Steuerungsgeräte 201, 202 vorliegt.

Die Transportfunktionseinheit 114 des Kommunikationsgeräts 100 baut eine erste Kommunikationsverbindung 110 zur Transportfunktionseinheit 214 des Primär-Steuerungsgeräts 201 und eine zweite Kommunikationsverbindung 120 zur Transportfunktionseinheit 224 des Sekundär-Steuerungsgeräts 201 auf. In beiden Fällen erfolgt dies entsprechend Transmission Control Protocol. Dabei werden durch die Transportfunktionseinheiten 114, 214, 224 für die erste Kommunikationsverbindung 110 und die zweite Kommunikationsverbindung 120 jeweils korrespondierende Multipath-TCP-Subflows 112-113, 212-213, 222-223 erzeugt. Für die erste Kommunikationsverbindung 110 wird jeweils ein erster Multipath-TCP-Subflow 112, 212, 222, erzeugt, während für die zweite Kommunikationsverbindung 120 jeweils ein zweiter Multipath-TCP-Subflow 113, 213, 223 erzeugt wird.

Über die erste Kommunikationsverbindung 110 übermittelte Daten werden vom Primär-Steuerungsgerät 201 über eine erste Synchronisationsverbindung 210 an das Sekundär-Steuerungsgerät 202 weitergeleitet. Dementsprechend werden über die zweite Kommunikationsverbindung 220 übermittelte Daten vom Sekundär-Steuerungsgerät 202 über eine zweite Synchronisationsverbindung 220 an das Primär-Steuerungsgerät 201 weitergeleitet. Für die Synchronisationsverbindungen 210, 220 werden vorzugsweise optische Ethernet-Übertragungsstecken verwendet.

Die Transportfunktionseinheit 214 des Primär-Steuerungsgeräts 201 und die Transportfunktionseinheit 224 des Sekundär-Steuerungsgeräts 202 verwalten somit jeweils eine dem ersten Multipath-TCP-Subflow 212, 222 zugeordnete Verbindung und eine dem zweiten Multipath-TCP-Subflow 213, 223 zugeordnete Verbindung. Insbesondere ordnet die Transportfunktionseinheit 224 des Sekundär-Steuerungsgeräts 202 über die erste Synchronisationsverbindung 210 weitergeleitete Daten der ersten Kommunikationsverbindung 110 dem ersten Multipath-TCP-Subflow 222 zu, während die Transportfunktionseinheit 214 des Primär-Steuerungsgeräts 201 über die zweite Synchronisationsverbindung 220 weitergeleitete Daten der zweiten Kommunikationsverbindung 120 dem zweiten Multipath-TCP-Subflow 213 zuordnet.

Fällt eines der beiden Steuerungsgeräte 201, 202, oder ist eine Datenübermittlung auf einer der beiden Kommunikationsverbindungen 110, 120 gestört, so kann das Kommunikationsgerät 100 die ausfallgesicherte Steuerungseinheit 200 über die verbleibende Kommunikationsverbindung weiterhin erreichen. Dies wird für auf dem Kommunikationsgerät 100 bzw. auf den Steuerungsgeräten 201, 202 ablaufende Anwendungen transparent auf Basis von Multipath-TCP sichergestellt. Ein Ausfall oder eine Störung führt allenfalls zu einem reduzierten Datendurchsatz.

Darüber hinaus können die beiden Kommunikationsverbindungen 110, 120 grundsätzlich asymmetrisch belastet werden, indem einer der beiden Multipath-TCP-Subflows lediglich als Reserve aufgebaut wird und eine Datenübermittlung nur über einen aktiv genutzten Multipath-TCP-Subflow erfolgt. In einem solchen Fall werden beispielsweise zunächst nur über die erste Kommunikationsverbindung 110 Daten übermittelt, während die zweite Kommunikationsverbindung 120 als Standby-Verbindung aufgebaut wird. Erst bei einem Ausfall der ersten Kommunikationsverbindung 110 werden Daten über die zweite Kommunikationsverbindung 120 übermittelt.

Außerdem können auch für die beiden Kommunikationsverbindungen 110, 120 auch Lastverteilungsverfahren genutzt werden. Beispielsweise werden zwischen dem Kommunikationsgerät 100 und der ausfallgesicherten Steuerungseinheit 200 zu übermittelnde Datensegmente wahlweise und lastabhängig über die erste Kommunikationsverbindung 110 oder über die zweite Kommunikationsverbindung 120 übermittelt. Hierzu werden zwischen dem Kommunikationsgerät 100 und der ausfallgesicherte Steuerungseinheit 200 zu übermittelnde Datensegmente in erste Datensegmente, die nur über die erste Kommunikationsverbindung 110 übermittelt werden, und in zweite Datensegmente unterteilt, die nur über die zweite Kommunikationsverbindung 120 übermittelt werden,.

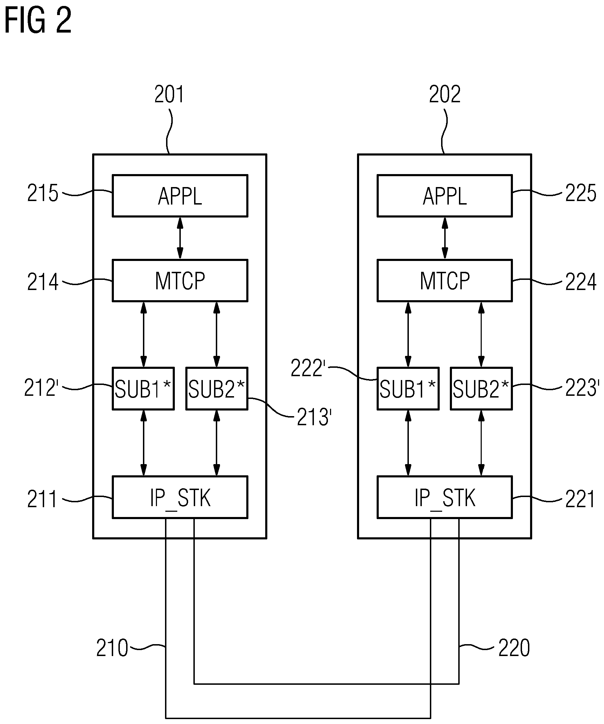

Entsprechend Figur 2 wird Multipath-TCP vorzugsweise auch für die Synchronisationsverbindungen 210, 220 zwischen dem Primär-Steuerungsgerät 201 und dem Sekundär-Steuerungsgerät 202 genutzt. Dabei werden für die erste Synchronisationsverbindung 210 und die zweite Synchronisationsverbindung 220 zwischen korrespondierende Multipath-TCP-Subflows 212`-213`, 222`-223` erzeugt, die jeweils von den Transportfunktionseinheiten 214, 224 der Steuerungsgeräte 201, 202 verwaltet werden. Eine Verwendung von Multipath-TCP für die Synchronisationsverbindungen 210, 220 ist in einigen Betriebszuständen eines redundanten Automatisierungssystems äußerst vorteilhaft, insbesondere wenn bei einer Reintegration eines Steuerungsgeräts 201, 202 erhebliche Datenmengen zu übertragen sind. Da derartige Vorgänge möglichst schnell ablaufen sollen, ist eine Bündelung von Übertragungsraten beider Synchronisationsverbindungen vorteilhaft und führt zu einer verbesserten System-Performance sowie zu einer gesteigerten Verfügbarkeit.

## Patentansprüche

1. Verfahren zum Aufbau einer redundanten Kommunikationsverbindung zwischen einem Kommunikationsgerät und einer ausfallgesicherten Steuerungseinheit, bei dem
- die ausfallgesicherte Steuerungseinheit (200) einem industriellen Automatisierungssystem zugeordnet ist und zumindest ein Primär-Steuerungsgerät (201) sowie ein Sekundär-Steuerungsgerät (202) umfasst,
- das Primär-Steuerungsgerät und das Sekundär-Steuerungsgerät zueinander redundant sind,
- eine Transport- und/oder Vermittlungsfunktionseinheit (111, 114) des Kommunikationsgeräts (100) unter Verwendung zumindest einer dem Primär-Steuerungsgerät und/oder dem Sekundär-Steuerungsgerät zugeordneten Kommunikationsnetzadresse zwei Kommunikationsverbindungen zur ausfallgesicherten Steuerungseinheit aufbaut,
- wobei die Transport- und/oder Vermittlungsfunktionseinheit des Kommunikationsgeräts eine erste Kommunikationsverbindung (110) zu einer Transport- und/oder Vermittlungsfunktionseinheit (211, 214) des Primär-Steuerungsgeräts und eine zweite Kommunikationsverbindung (120) zu einer Transport- und/oder Vermittlungsfunktionseinheit (221, 224) des Sekundär-Steuerungsgeräts aufbaut,
- über die erste Kommunikationsverbindung übermittelte Daten vom Primär-Steuerungsgerät über eine erste Synchronisationsverbindung (210) an das Sekundär-Steuerungsgerät weitergeleitet werden,
- über die zweite Kommunikationsverbindung übermittelte Daten vom Sekundär-Steuerungsgerät über eine zweite Synchronisationsverbindung (220) an das Primär-Steuerungsgerät weitergeleitet werden,
- zwischen dem Kommunikationsgerät und der ausfallgesicherten Steuerungseinheit zu übermittelnde Datensegmente alternierend über die erste Kommunikationsverbindung oder über die zweite Kommunikationsverbindung übermittelt werden.

2. Verfahren nach Anspruch 1,
bei dem die erste Kommunikationsverbindung (110) und die zweite Kommunikationsverbindung (120) entsprechend Transmission Control Protocol aufgebaut werden.

3. Verfahren nach Anspruch 2,
bei dem die Transport- und/oder Vermittlungsfunktionseinheit des Primär-Steuerungsgeräts und die Transport- und/oder Vermittlungsfunktionseinheit des Sekundär-Steuerungsgeräts jeweils eine Multipath-TCP-Funktionalität aufweisen und bei dem die Transport- und/oder Vermittlungsfunktionseinheit des Kommunikationsgeräts eine Multipath-TCP-Funktionalität aufweist.

4. Verfahren nach Anspruch 3,
bei dem die erste Kommunikationsverbindung und die zweite Kommunikationsverbindung jeweils als korrespondierende Multipath-TCP-Subflows (112-113, 212-213, 222-223) aufgebaut werden, bei dem die erste Kommunikationsverbindung ein erster Multipath-TCP-Subflow ist und bei dem die zweite Kommunikationsverbindung ein zweiter Multipath-TCP-Subflow ist.

5. Verfahren nach Anspruch 4,
bei dem die Transport- und/oder Vermittlungsfunktionseinheit des Primär-Steuerungsgeräts und die Transport- und/oder Vermittlungsfunktionseinheit des Sekundär-Steuerungsgeräts jeweils eine dem ersten Multipath-TCP-Subflow zugeordnete Verbindung und eine dem zweiten Multipath-TCP-Subflow zugeordnete Verbindung verwalten.

6. Verfahren nach Anspruch 5,
bei dem die Transport- und/oder Vermittlungsfunktionseinheit des Sekundär-Steuerungsgeräts über die erste Synchronisationsverbindung weitergeleitete Daten der ersten Kommunikationsverbindung dem ersten Multipath-TCP-Subflow zuordnet und bei dem die Transport- und/oder Vermittlungsfunktionseinheit des Primär-Steuerungsgeräts über die zweite Synchronisationsverbindung weitergeleitete Daten der zweiten Kommunikationsverbindung dem zweiten Multipath-TCP-Subflow zuordnet.

7. Verfahren nach einem der Ansprüche 1 bis 6,
bei dem zwischen dem Kommunikationsgerät und der ausfallgesicherten Steuerungseinheit zu übermittelnde Datensegmente in erste Datensegmente, die nur über die erste Kommunikationsverbindung übermittelt werden, und in zweite Datensegmente, die nur über die zweite Kommunikationsverbindung übermittelt werden, unterteilt werden.

8. Verfahren nach einem der Ansprüche 1 bis 7,
bei dem die erste Synchronisationsverbindung und die zweite Synchronisationsverbindung zwischen dem Primär-Steuerungsgerät und dem Sekundär-Steuerungsgerät als korrespondierende Multipath-TCP-Subflows aufgebaut werden.

9. Verfahren nach einem der Ansprüche 1 bis 8,
bei dem das Primär-Steuerungsgerät und das Sekundär-Steuerungsgerät auf eine Anfrage eines Kommunikationsgeräts zum Aufbau einer Kommunikationsverbindung eine Adressinformation zum jeweils anderen Steuerungsgerät bereitstellen.

10. Verfahren nach einem der Ansprüche 1 bis 9,
bei dem die Transport- und/oder Vermittlungsfunktionseinheiten zur Verarbeitung eines Internetprotokollstapels ausgestaltet und eingerichtet sind.

11. Verfahren nach einem der Ansprüche 1 bis 10,
bei dem die Transport- und/oder Vermittlungsfunktionseinheiten in das Kommunikationsgerät und/oder in die Steuerungsgeräte integriert sind und bei dem die Transport- und/oder Vermittlungsfunktionseinheiten jeweils über einen Kommunikationsnetzadapter-Treiber auf einen Kommunikationsnetzadapter des Kommunikationsgeräts und/oder der Steuerungsgeräte zugreifen.

12. Verfahren nach Anspruch 11,
bei dem die Kommunikationsnetzadapter jeweils eine Sende- und Empfangseinheit und eine Steuerungseinheit zur Koordination eines Zugriffs auf ein Kommunikationsmedium umfassen.

13. Ausfallgesicherte Steuerungseinheit zur Durchführung eines Verfahrens nach einem der Ansprüche 1 bis 12,
- wobei die ausfallgesicherte Steuerungseinheit (200) zumindest ein Primär-Steuerungsgerät (201) sowie ein Sekundär-Steuerungsgerät (202) umfasst,
- wobei das Primär-Steuerungsgerät und das Sekundär-Steuerungsgerät zueinander redundant sind und jeweils eine Transport- und/oder Vermittlungsfunktionseinheit (211, 214; 221, 224) umfassen,
- wobei die ausfallgesicherte Steuerungseinheit dafür ausgestaltet und eingerichtet ist, dass eine Transportund/oder Vermittlungsfunktionseinheit (111, 114) eines Kommunikationsgeräts (100) unter Verwendung zumindest einer dem Primär-Steuerungsgerät und/oder dem Sekundär-Steuerungsgerät zugeordneten Kommunikationsnetzadresse zwei Kommunikationsverbindungen zur ausfallgesicherten Steuerungseinheit aufbaut,
- wobei die ausfallgesicherte Steuerungseinheit dafür ausgestaltet und eingerichtet ist, dass über eine erste Kommunikationsverbindung (110) zwischen dem Kommunikationsgerät und dem Primär-Steuerungsgerät übermittelte Daten vom Primär-Steuerungsgerät über eine erste Synchronisationsverbindung (210) an das Sekundär-Steuerungsgerät weitergeleitet werden,
- wobei die ausfallgesicherte Steuerungseinheit dafür ausgestaltet und eingerichtet ist, dass über eine zweite Kommunikationsverbindung (120) zwischen dem Kommunikationsgerät und dem Sekundär-Steuerungsgerät übermittelte Daten vom Sekundär-Steuerungsgerät über eine zweite Synchronisationsverbindung (220) an das Primär-Steuerungsgerät weitergeleitet werden,
- wobei die ausfallgesicherte Steuerungseinheit dafür ausgestaltet und eingerichtet ist, dass zwischen dem Kommunikationsgerät und der ausfallgesicherten Steuerungseinheit zu übermittelnde Datensegmente alternierend über die erste Kommunikationsverbindung oder über die zweite Kommunikationsverbindung übermittelt werden.

## Claims

1. Method for setting up a redundant communication connection between a communication device and a failsafe control unit, in which
- the failsafe control unit (200) is associated with an industrial automation system and comprises at least a primary control device (201) and a secondary control device (202),
- the primary control device and the secondary control device are redundant in relation to one another,
- a transport and/or switching functional unit (111, 114) of the communication device (100) uses at least one communication network address associated with the primary control device and/or the secondary control device to set up two communication connections to the failsafe control unit,
- wherein the transport and/or switching functional unit of the communication device sets up a first communication connection (110) to a transport and/or switching functional unit (211, 214) of the primary control device and a second communication connection (120) to a transport and/or switching functional unit (221, 224) of the secondary control device,
- data transmitted via the first communication connection are forwarded from the primary control device to the secondary control device via a first synchronization connection (210),
- data transmitted via the second communication connection are forwarded from the secondary control device to the primary control device via a second synchronization connection (220),
- data segments to be transmitted between the communication device and the failsafe control unit are alternately transmitted via the first communication connection or via the second communication connection.

2. Method according to Claim 1,
in which the first communication connection (110) and the second communication connection (120) are set up according to Transmission Control Protocol.

3. Method according to Claim 2,
in which the transport and/or switching functional unit of the primary control device and the transport and/or switching functional unit of the secondary control device each have a Multipath TCP functionality and in which the transport and/or switching functional unit of the communication device has a Multipath TCP functionality.

4. Method according to Claim 3,
in which the first communication connection and the second communication connection are each set up as corresponding Multipath TCP subflows (112-113, 212-213, 222-223), in which the first communication connection is a first Multipath TCP subflow and in which the second communication connection is a second Multipath TCP subflow.

5. Method according to Claim 4,
in which the transport and/or switching functional unit of the primary control device and the transport and/or switching functional unit of the secondary control device each manage a connection associated with the first Multipath TCP subflow and a connection associated with the second Multipath TCP subflow.

6. Method according to Claim 5,
in which the transport and/or switching functional unit of the secondary control device associates data of the first communication connection that are forwarded via the first synchronization connection with the first Multipath TCP subflow and in which the transport and/or switching functional unit of the primary control device associates data of the second communication connection that are forwarded via the second synchronization connection with the second Multipath TCP subflow.

7. Method according to one of Claims 1 to 6,
in which data segments to be transmitted between the communication device and the failsafe control unit are divided into first data segments, which are transmitted only via the first communication connection, and into second data segments, which are transmitted only via the second communication connection.

8. Method according to one of Claims 1 to 7,
in which the first synchronization connection and the second synchronization connection are set up as corresponding Multipath TCP subflows between the primary control device and the secondary control device.

9. Method according to one of Claims 1 to 8,
in which the primary control device and the secondary control device respond to a request of a communication device for setting up a communication connection by providing a piece of address information for the respective other control device.

10. Method according to one of Claims 1 to 9,
in which the transport and/or switching functional units are designed and configured for processing an Internet protocol stack.

11. Method according to one of Claims 1 to 10,
in which the transport and/or switching functional units are integrated in the communication device and/or in the control devices and in which the transport and/or switching functional units each use a communication network adapter driver to access a communication network adapter of the communication device and/or of the control devices.

12. Method according to Claim 11,
in which the communication network adapters each comprise a transmission and reception unit and a control unit for coordinating access to a communication medium.

13. Failsafe control unit for performing a method according to one of Claims 1 to 12,
- wherein the failsafe control unit (200) comprises at least a primary control device (201) and a secondary control device (202),
- wherein the primary control device and the secondary control device are redundant in relation to one another and each comprise a transport and/or switching functional unit (211, 214; 221, 224),
- wherein the failsafe control unit is designed and configured so that a transport and/or switching functional unit (111, 114) of a communication device (100) uses at least one communication network address associated with the primary control device and/or the secondary control device to set up two communication connections to the failsafe control unit,
- wherein the failsafe control unit is designed and configured so that a first communication connection (110) is used to forward data transmitted between the communication device and the primary control device from the primary control device to the secondary control device via a first synchronization connection (210),
- wherein the failsafe control unit is designed and configured so that a second communication connection (120) is used to forward data transmitted between the communication device and the secondary control device from the secondary control device to the primary control device via a second synchronization connection (220),
- wherein the failsafe control unit is designed and configured so that data segments to be transmitted between the communication device and the failsafe control unit are alternately transmitted via the first communication connection or via the second communication connection.

## Revendications

1. Procédé d'établissement d'une connexion de communication redondante entre un appareil de communication et une unité de commande sécurisée à la défaillance, dans lequel
- l'unité (200) de commande sécurisée à la défaillance est affectée à un système d'automatisation industriel et comprend au moins un appareil (201) de commande primaire ainsi qu'un appareil (202) de commande secondaire,
- l'appareil de commande primaire et l'appareil de commande secondaire sont redondants l'un par rapport à l'autre,
- une unité (111, 114) fonctionnelle de transport et/ou de commutation de l'appareil (100) de communication établit, en utilisant au moins une adresse de réseau de communication associée à l'appareil de commande primaire et/ou à l'appareil de commande secondaire, deux connexions de communication avec une unité de commande sécurisée à la défaillance,
- dans lequel l'unité fonctionnelle de transport et/ou de commutation de l'appareil de connexion établit une première connexion (110) de communication avec une unité (211, 214) fonctionnelle de transport et/ou de commutation de l'appareil de commande primaire et une deuxième connexion (120) de communication avec une unité (221, 224) fonctionnelle de transport et/ou de commutation de l'appareil de commande secondaire,
- on achemine, de l'appareil de commande primaire à l'appareil de commande secondaire, par une première connexion (210) de synchronisation, des données transmises par la première connexion de communication,
- on achemine, de l'appareil de commande secondaire à l'appareil de commande primaire, par une deuxième connexion (220) de synchronisation, des données transmises par la deuxième connexion de communication,
- on transmet, en alternance par la première connexion de communication ou par la deuxième connexion de communication, des segments de données à transmettre entre l'appareil de communication et l'unité de commande sécurisée à la défaillance.

2. Procédé suivant la revendication 1,
dans lequel on établit la première connexion (110) de communication et la deuxième connexion (120) de communication conformément à Transmission Control Protocol.

3. Procédé suivant la revendication 2,
dans lequel l'unité fonctionnelle de transport et/ou de commutation de l'appareil de programme primaire et l'unité fonctionnelle et/ou de commutation de l'appareil de commande secondaire ont chacune une fonctionnalité multipath TCP, et dans lequel l'unité fonctionnelle de transport et/ou de commutation de l'appareil de communication a une fonctionnalité multipath TCP.

4. Procédé suivant la revendication 3,
dans lequel on établit la première connexion de communication et la deuxième connexion de communication respectivement sous la forme de multipath - TCP subflows (112-113, 212-213, 222-223) correspondantes, dans lequel la première connexion de communication est un premier multipath - TCP subflow, et dans lequel la deuxième connexion de communication est un deuxième multipath - TCP subflow.

5. Procédé suivant la revendication 4,
dans lequel l'unité fonctionnelle de transport et/ou de commutation de l'appareil de commande primaire et l'unité fonctionnelle de transport et/ou de commutation de l'appareil de commande secondaire gèrent respectivement une connexion associée au premier multipath - TCP subflow, et une connexion associée au deuxième multipath - TCP subflow.

6. Procédé suivant la revendication 5,
dans lequel l'unité fonctionnelle de transport et/ou de commutation de l'appareil de commande secondaire associe au premier multipath - TCP subflow des données, acheminées par la première connexion de synchronisation, de la première connexion de communication, et dans lequel l'unité fonctionnelle de transport et/ou de commutation de l'appareil de commutation primaire associe au deuxième multipath - TCP subflow des données, acheminées par la deuxième connexion de synchronisation, de la deuxième connexion de communication.

7. Procédé suivant l'une des revendications 1 à 6,
dans lequel on subdivise des segments de données à transmettre entre l'appareil de communication et l'unité de commande sécurisée à la défaillance entre des premiers segments de données, qui ne sont transmis que par la première connexion de communication et en des deuxièmes segments de données, qui ne sont transmis que par la deuxième connexion de communication.

8. Procédé suivant l'une des revendications 1 à 7,
dans lequel on établit la première connexion de synchronisation et la deuxième connexion de synchronisation entre l'appareil de commande primaire et l'appareil de commande secondaire sous la forme de multipath - TCP subflows correspondant.

9. Procédé suivant l'une des revendications 1 à 8,
dans lequel l'appareil de commande primaire et l'appareil de commande secondaire mettent à disposition, sur une demande d'un appareil de communication d'établissement d'une connexion de communication, une information d'adresse de respectivement l'autre appareil de commande.

10. Procédé suivant l'une des revendications 1 à 9,
dans lequel les unités fonctionnelles de transport et/ou de commutation sont conformées et conçues pou le traitement d'une pile de protocole Internet.

11. Procédé suivant l'une des revendications 1 à 10,
dans lequel les unités fonctionnelles de transport et/ou de commutation sont intégrées à l'appareil de communication et/ou aux appareils de commande, et dans lequel les unités fonctionnelles de transport et/ou de commutation accèdent respectivement par un adapteur - excitateur de réseau de communication à un adapteur de réseau de communication de l'appareil de communication et/ou des appareils de commande.

12. Procédé suivant la revendication 11,
dans lequel les adaptateurs de réseau de communication comprennent chacun une unité d'émission et de réception et une unité de commande pour la coordination d'un accès à un support de communication.

13. Unité de commande sécurisée à la défaillance pour effectuer un procédé suivant l'une des revendications 1 à 12,
- dans laquelle l'unité (200) de commande sécurisée à la défaillance comprend au moins un appareil (201) de commande primaire ainsi qu'un appareil (202) de commande secondaire,
- dans laquelle l'appareil de commande primaire et l'appareil de commande secondaire sont redondants l'un par rapport à l'autre et comprennent chacun une unité (211, 214 ; 221, 224) fonctionnelle de transport et/ou de commutation,
- dans laquelle l'unité de commande sécurisée à la défaillance est conformée et conçue, de manière à ce qu'une unité (111, 114) fonctionnelle de transport et/ou de commutation d'un appareil (100) de communication établisse, en utilisant au moins une adresse de réseau de communication associée à l'appareil de commande primaire et/ou à l'appareil de commande secondaire, deux connexions de communication avec l'unité de commande sécurisée à la défaillance,
- dans laquelle l'unité de commande sécurisée à la défaillance est conformé et conçue, de manière à acheminer, de l'appareil de commande primaire à l'appareil de commande secondaire, par une première connexion (210) de synchronisation, des données transmises entre l'appareil de communication et l'appareil de commande primaire par une première connexion (110) de communication,
- dans laquelle l'unité de commande sécurisée à la défaillance est conformée et conçue, de manière à acheminer, de l'appareil de commande secondaire à l'appareil de commande primaire, par une deuxième connexion (220) de synchronisation, des données transmises entre l'appareil de communication et l'appareil de commande primaire par une deuxième connexion (120) de communication,
- dans laquelle l'unité de commande sécurisée à la défaillance est conformée et conçue de manière à transmettre des segments de données à transmettre entre l'appareil de communication et l'unité de commande sécurisée à la défaillance, en alternance, par la première connexion de communication ou par la deuxième connexion de communication.
